## Europäisches Patentamt
## European Patent Office
## Office européen des brevets

(19)

(11) Veröffentlichungsnummer: **0 010 224**
A1

(12)

# EUROPÄISCHE PATENTANMELDUNG

(21) Anmeldenummer: 79103775.7

(22) Anmeldetag: 03.10.79

(51) Int. Cl.³: **B 60 C 7/12**
    **B 29 H 11/00**

(30) Priorität: 18.10.78 DE 2845310

(43) Veröffentlichungstag der Anmeldung:
30.04.80 Patentblatt 80/9

(84) Benannte Vertragsstaaten:
AT BE DE FR GB IT NL SE

(71) Anmelder: BAYER Aktiengesellschaft
Zentralbereich Patente,Marken und Lizenzen
Bayerwerk
D-5090 Leverkusen 1(DE)

(72) Erfinder: Ippen, Jakob, Dr.
Schleiermacher Strasse 17
D-5090 Leverkusen(DE)

(72) Erfinder: Stüttgen, Friedel
Albrecht-Dürer-Strasse 94
D-5024 Pulheim(DE)

(54) Reifen für langsam fahrende Fahrzeuge.

(57) Der Reifen für langsam fahrende Fahrzeuge besitzt eine
Lauffläche (1), in der die Kräfte in der Stützlinie, wie sie bei
einem Gewölbe auftreten, abgetragen werden. Die Federung
des Reifens wird durch die Seitenwände aufgenommen.

FIG.1

EP 0 010 224 A1

Croydon Printing Company Ltd.

0010224

BAYER AKTIENGESELLSCHAFT     5090 Leverkusen, Bayerwerk
Zentralbereich
Patente,Marken und Lizenzen     Kr/bc

Reifen für langsam fahrende Fahrzeuge
_____

Die Erfindung betrifft Reifen für langsam fahrende Fahrzeuge, insbesondere Zweiradfahrzeuge, bestehend aus einem
Mantel mit zwei umlaufenden konkaven Nuten zur Anlage an
die Felgenhörner.

Das tragende Element von Luftreifen für Fahrzeuge ist die
Karkasse. Dies ist im Prinzip ein Hohlkörper in Form eines
Torus aus vulkanisiertem Kautschuk, der auf Zug beanspruchbare Verstärkungselemente (Textilcord) enthält. Der Hohlkörper ist mit Luft unter Überdruck gefüllt. Seine Seitenwände stehen unter Zugspannung. Das Gewicht des Fahrzeugs
wirkt dieser Zugspannung entgegen und hebt sie teilweise
auf. Wird ein solcher Reifen undicht und verliert seinen
Innendruck, dann überwiegt die durch das Fahrzeuggewicht
erzeugte Druckspannung; der Reifen verliert seine Form
und ist in der Praxis unbrauchbar.

Le A 19 117

0010224

Massive Reifen, in denen keine Druckluft als Federungselement enthalten ist (Vollgummireifen), haben diesen Nachteil nicht. Dafür ist ihre Masse sehr groß. Es bildet sich beim Abrollen ein hoher Rollwiderstand, der bei höheren Geschwindigkeiten zu einem Hitzestau führt.

Es sind Versuche bekannt, durch besondere Konstruktionen pannensichere Zweiradreifen zu entwickeln, die sich im wesentlichen darauf beschränken, die jetzige Form des Reifens beizubehalten, die Wandstärken entsprechend dicker auszulegen bzw. mit zusätzlichen Verstärkungsrippen zu versehen oder durch besonders sinusförmig verlaufende Einschnitte Hohlräume zu schaffen, um die Masse zu reduzieren und trotzdem genügend Stabilität beim Fahren ohne Luft zu erreichen. All diese Reifen weisen jedoch beim Gebrauch in der Praxis ein sehr hohes Gewicht und einen sehr hohen Rollwiderstand auf. Darüber hinaus werden alle heutigen Ausführungsformen, einschließlich normaler Luftreifen, in üblichen Vulkanisierformen abgeheizt, d.h. man benötigt für jede einzelne Reifendimension eine spezielle Reifenform. Außerdem ist bei allen vergleichbaren pannensicheren Zweiradreifen das Gewicht wesentlich höher als das eines normalen Luftreifens.

Aufgabe der Erfindung ist es, einen leichten Reifen für langsam fahrende Fahrzeuge, insbesondere Zweiradfahrzeuge, zu finden, der nicht schon bei kleineren Verletzungen (z.B. Nageleinstich) seine Tragfähigkeit verliert und trotzdem gute Federungseigenschaften besitzt. Weiter ist die Verwendung eines einheitlichen Stoffes anzustreben, um moderne Massenfertigungsverfahren einsetzen zu können.

Le A 19 117

- 3 -

Die Aufgabe wird erfindungsgemäß dadurch gelöst, daß bei dem Mantel aus einheitlichem Material die Seitenwände auf der Laufseite durch eine außen stark konvex gewölbte, bis zum Zenith in der Dicke zunehmende Lauffläche verbunden sind, deren Trägheitsmoment sich mindestens um den sechsfachen Wert ändert, und daß die Seitenwände im Felgenbett durch zwei sich gegenseitig quer zum Radius des Felgen stützende Ringe gehalten werden, dessen Höhe mindestens gleich der Höhe des Felgenhorns ist.

Für den Fachmann ist es überraschend, daß es möglich ist, einen Reifen ohne Verstärkungsmaterial (Reifencord, Draht) herzustellen, der auf Luft als Federelement verzichtet und trotzdem im Gewicht, Federverhalten und Rollwiderstand ähnliche Eigenschaften wie der Normalreifen aufweist.

Die auf die Felge aufgezogenen, sich gegenseitig stützenden Ringe zwischen den Felgenhörnern übertragen die Kräfte des Fahrzeugs sicher auf die federnden Seitenwände, die diese wiederum über die versteifte Lauffläche unter teilweiser Nutzung der Bogenwirkung auf den Untergrund überleiten. Neben guter Rundlaufeigenschaft liegt eine hohe Seitenstabilität vor.

Der Reifen ist unempfindlich gegen Schnitt- und Nagelverletzungen, da keine Tragluft vorhanden ist, die entweichen kann. Er ist daher besonders für Krankenfahrstühle geeignet.

Das Aufziehen des Reifens ist einfach, da neben der Vorspannung in Umfangsrichtung von mindestens 2 % durch entsprechende Fertigungsspaltbreite zwischen den Ringen

Le A 19 117

durch eine sichere Halterung in den Felgenhörnern von vorneherein berücksichtigt werden kann.

Die Fertigung gegenüber den bisher üblichen Luftreifen wird vereinfacht, da wegen des einheitlichen Werkstoffes der Reifen nicht lageweise aufgebaut werden muß. Die wirtschaftliche Ersparnis ist also groß.

In einer besonderen Ausführung besteht der Mantel aus abgelängten extrudierten Profilen, wobei die Stirnseiten auf Stoß miteinander unlösbar verbunden sind.

Da der Reifen aus einem einheitlichen Material besteht, bietet sich das wirtschaftliche Verfahren des Extrudierens an.

Das endlose Profil braucht anschließend nur noch entsprechend dem Umfang abgelängt und zusammengesetzt zu werden. Es ist also nicht notwendig, für jeden Reifendurchmesser eine besondere, teure Form bereitzuhalten.

In einer anderen Ausführungsform sind die Ringe gegen radiale Verschiebung durch ineinandergreifende Formen gesichert.

Durch einen v-förmigen Schlitz oder Verzahnung wird vermieden, daß sich die beiden Ringe nach Einbau in die Felgen gegeneinander radial verschieben können. Es liegt somit ein einwandfreier Formschluß zur Übertragung der Seitenkräfte vor, der für eine hohe Seiten-Stabilität des Reifens sorgt.

Le A 19 117

- 5 -

In einer weiteren Ausführung ist ein Profil an der Lauffläche eingeprägt.

Aus den extrudierten Längsprofilen kann vor der Vulkanisation durch Querwalzen ein Profil geprägt werden, welches unter Umständen die Griffigkeit des Reifens verbessert.

Ein Ausführungsbeispiel ist in den Zeichnungen dargestellt und wird im folgenden näher beschrieben. Es zeigen:

Fig. 1    Querschnitt durch Reifen
Fig. 2    Querschnitt durch Reifen
Fig. 3    Längsschnitt durch Verbindungswerkzeug
Fig. 4    Querschnitt durch Verbindungswerkzeug

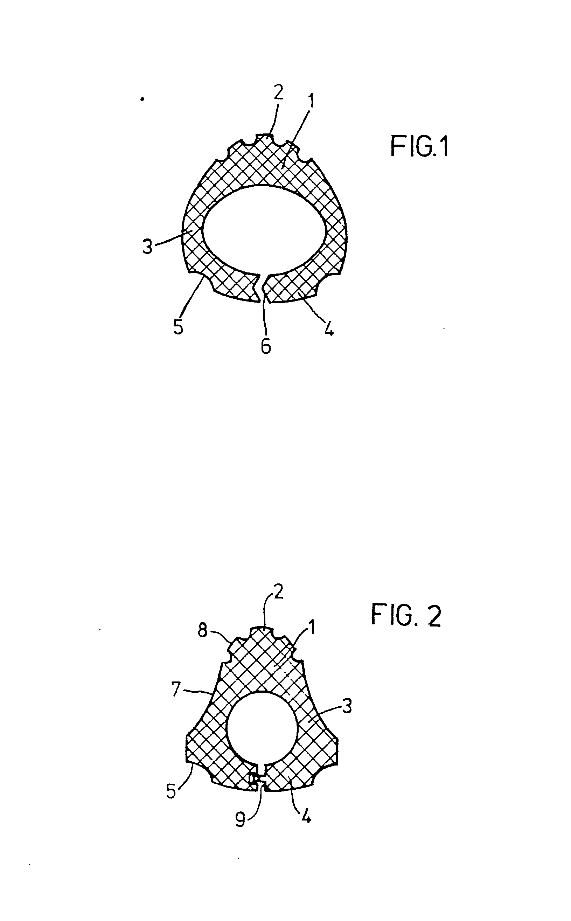

In Fig. 1 ist ein extrudierter Reifenquerschnitt dargestellt. Die im Zenith vorhandene maximale Dicke der Lauffläche 1 mit Profilen 2 geht unter stetiger Verjüngung in die Seitenwand 3 über, an der sich ein Ring 4 mit konkaver Form 5 für ein Felgenhorn (nicht dargestellt) und ein V-förmiger Schlitz 6 anschließt. Die andere Hälfte des Reifens ist spiegelbildlich angeordnet.

In Fig. 2 ist ein Querschnitt dargestellt, bei dem die äußere Konturlinie 7, beginnend am Zenith 8 der Lauffläche 1 seitlich ausläuft, wodurch die bogenartige Abstützung der Seitenwände 3 am Felgenhorn 5 (nicht dargestellt) deutlich zum Ausdruck kommt. Die beiden Ringe 4 sind hier über ein Nut-Feder-Element 9 verbunden.

Le A 19 117

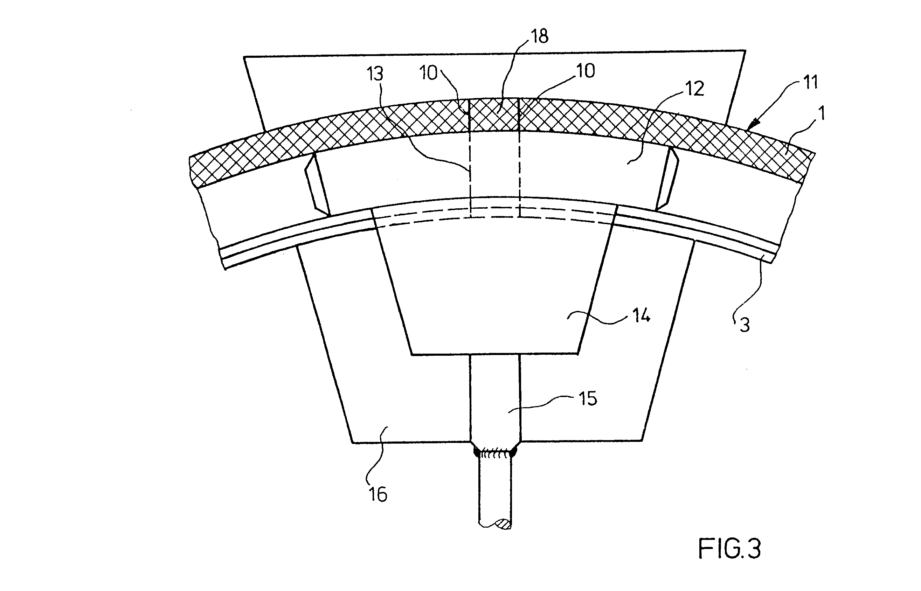

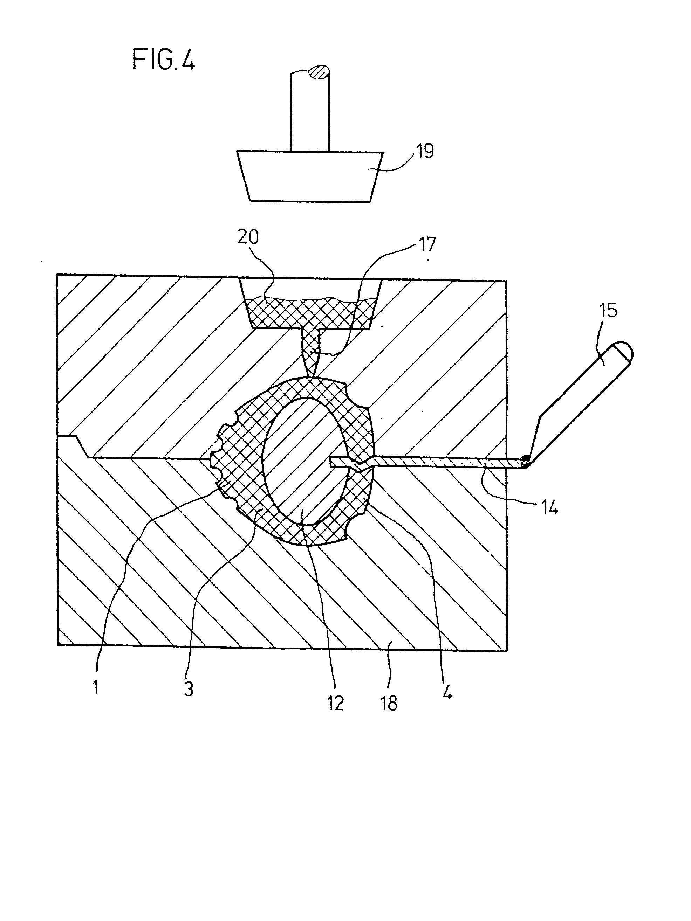

Fig. 3,4 zeigt ein Werkzeug zum Stoßen und Verbinden des abgelängten, extrudierten, vulkanisierten Reifenstückes 11 zu einem runden Reifen. Die beiden Enden 10 des Reifenstückes 11 werden über einen Dorn 12 bis zur Markierungslinie 13 vorgeschoben. Der runde Dorn 12 wird dabei über ein schmales, durch den Schlitz greifendes Blech 14 mit der Halterung 15 fixiert, welche radial bewegbar ist.

Das vorbeschriebene System ist von einer aufklappbaren Form 16 umgeben, die einen Anspritzkanal 17 zur Auffüllung des Raumes 18 zwischen den Enden 10 des Reifenstückes 11 besitzt. Das Material zur Verbindung des Reifenstückes 11 wird über Kolben 19 und Pfanne 20 dem Anspritzkanal 17 zugeführt.

Die Reifen der Erfindung können aus beliebigem Natur- oder Synthesekautschuk hergestellt werden, dessen Vulkanisate eine Shore-A-Härte von 50 bis 90 und einen Spannungswert von 11 bis 20 MPa bei 300 % Dehnung aufweisen. Besonders geeignet sind Naturkautschuk, Styrol-Butadien-Kautschuk, Polybutadien- und Äthylen/Propylen-Terpolymerisat-Kautschuk. Das Gewicht des Reifens ist mit dem eines entsprechenden Luftreifens vergleichbar. Die Reifen werden mit nachfolgenden Kautschukmischungen hergestellt:

Le A 19 117

| | | |
|---|---|---|
| | Naturkautschuk | 25,0 |
| | Styrol-Butadien-Copolymerisat | 25,0 |
| | cis-1,4-Polybutadien | 50,0 |
| | Ruß N-330 | 80,0 |
| | Harz | 4,0 |
| | Stearinsäure | 2,0 |
| | N-Isopropyl-N'-phenyl-p-phenylendiamin | 2,5 |
| | 2,2,4-Trimethyl-1,2-dihydrochinolen, polym. | 1,5 |
| | Zinkoxid | 5,0 |
| | Benzothiazyl-2-cyclohexylsulfenamid | 1,2 |
| | Unlöslicher Schwefel | 2,66 |
| | | 198,86 |

| | | |
|---|---|---|
| | Mischungsplastizität /80°C Defo-Härte/Defo-Elastizität | 7700/17 |
| | Zugfestigkeit (MPa) | 19,9 |
| | Bruchdehnung (%) | 310 |
| | Spannungswert bei 300 % Dehnung (MPa) | 19,1 |
| | Weiterreißfestigkeit nach Pohle (N) | 160 |
| | Härte (Shore A) bei 20°C | 82 |

----------

| | | |
|---|---|---|
| | Naturkautschuk | 80,0 |
| | cis-1,4-Polybutadien | 20,0 |
| | Ruß N-330 | 55,0 |
| | Aromatisches Mineralöl | 3,0 |
| | Stearinsäure | 2,5 |
| | Ozonschutzwachs | 1,0 |
| | N-Isopropyl-N'-phenyl-p-phenylendiamin | 2,5 |
| | 2,2,4-Trimethyl-1,2-dihydrochinolen, polym. | 1,5 |
| | Zinkoxid | 5,0 |
| | Benzothiazyl-2-sulfenmorpholid | 1,8 |
| | Schwefel | 0,85 |
| | Diphenylguanidin | 1,4 |
| | 2-Mercaptobenzothiazol | 1,4 |
| | | 175,95 |

Le A 19 117

| | |
|---|---|
| Mischungsplastizität / 80°C | |
| Defo-Härte / Defo-Elastizität | 1100/15 |
| Zugfestigkeit (MPa) | 21,9 |
| Bruchdehnung (%) | 460 |
| Spannungswert bei 300 % Dehnung (MPa) | 13 |
| Weiterreißfestigkeit nach Pohle (N) | 370 |
| Härte (Shore A) bei 20°C | 66 |

---------

| | |
|---|---|
| Ölverstrecktes Styrol-Butadien-Copolymerisat | 68,5 |
| Ölverstrecktes cis-1,4-Polybutadien | 68,5 |
| Ruß N-220 | 95,0 |
| Aromatisches Mineralöl | 20,0 |
| Harz | 2,0 |
| Stearinsäure | 2,0 |
| Ozonschutzwachs | 1,5 |
| N-Isopropyl-N'-phenyl-p-phenylendiamin | 2,5 |
| 2,2,4-Trimethyl-1,2-dihydrochinolin, polym. | 1,5 |
| Zinkoxid | 3,0 |
| Benzothiazyl-2-cyclohexylsulfenamid | 1,4 |
| Diphenylguanidin | 1,4 |
| Zink-N-dimethyldithiocarbamat | 1,0 |
| Schwefel | 1,2 |
| Calciumoxid | 10,0 |
| | 279,5 |

| | |
|---|---|
| Mischungsplastizität / 80°C | |
| Defo-Härte / Defo-Elastizität | 1550/16 |
| Zugfestigkeit (MPa) | 15,5 |
| Bruchdehnung (%) | 410 |
| Spannungswert b.300 % Dehnung (MPa) | 10,8 |
| Weiterreißfestigkeit nach Pohle (N) | 240 |
| Härte (Shore A) bei 20°C | 66 |

Le A 19 117

- 9 -

Patentansprüche

1) Reifenfür langsam fahrende Fahrzeuge, insbesondere Zweiradfahrzeuge, bestehend aus einem Mantel mit zwei umlaufenden konkaven Nuten zur Anlage an die Felgenhörner,
dadurch gekennzeichnet, daß bei dem Mantel aus einheitlichem Material die Seitenwände (3) auf der Laufseite
durch eine außen stark konvex gewölbte, bis zum Zenith
(8) in der Dicke zunehmende Lauffläche (1) verbunden
sind, deren Trägheitsmoment sich mindestens um den
sechsfachen Wert ändert, und daß die Seitenwände (3)
im Felgenbett durch zwei sich gegenseitig quer zum
Radius des Felgen stützende Ringe (4) gehalten werden,
dessen Höhe mindestens gleich der Höhe des Felgenhorns
ist.

2) Reifen nach Anspruch 1, dadurch gekennzeichnet, daß
der Mantel aus einem abgelängten extrudierten Profil
besteht, wobei die Stirnseiten auf Stoß miteinander
fest verbunden sind.

3) Reifen nach Anspruch 1 bis 2, dadurch gekennzeichnet,
daß die Ringe (4) gegen radiale Verschiebung durch
ineinandergreifende Formen gesichert sind.

4) Reifen nach Anspruch 1 bis 3, dadurch gekennzeichnet,
daß ein Profil (2) an der Lauffläche eingeprägt ist.

Le A 19 117

0010224

FIG.1

FIG. 2

FIG.3

FIG.4

**EUROPÄISCHER RECHERCHENBERICHT**

Europäisches
Patentamt

| EINSCHLÄGIGE DOKUMENTE | | | KLASSIFIKATION DER ANMELDUN (Int.Cl.) |
|---|---|---|---|
| Kategorie | Kennzeichnung des Dokuments mit Angabe, soweit erforderlich, der maßgeblichen Teile | betrifft Anspruch | B 60 C 7/12 |
| X | FR - A - 2 310 230 (GOODYEAR)<br><br>* Seite 3, Zeile 37 - Seite 4, Zeile 25; Figur 5 * | 1,4 | B 29 H 11/00 |
| | US - A - 3 901 300 (J. TOPLIS)<br><br>* Spalte 1, Zeilen 12-16; Spalte 3, Zeilen 1-33; Spalte 2, Zeilen 57-66 * | 1,3,4 | |
| | US - A - 4 033 395 (W. BERG)<br><br>* Spalte 1, Zeilen 17-38; Spalte 4, Zeilen 2-24; Spalte 6; Ansprüche 7,19 * | 2 | **RECHERCHIERTE SACHGEBIETE (Int. Cl. 3)**<br><br>B 60 C 7/10<br> 7/12<br>B 29 H 11/00 |
| A | NL - A - 74 03695 (PIET VAN DER POL) | | |
| A | US - A - 2 017 649 (M. BAUDOU) | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-01-1980 | SCHMITT |

EPA form 1503.1 06.78